# EUROPEAN PATENT APPLICATION

(11) **EP 4 446 467 A1**
(43) Date of publication of application: **16.10.2024**
(21) Application number: 23167532.3
(22) Date of filing: 12.04.2023
(51) Int. Cl.: C25B 1/04, C25B 9/19, C25B 9/63, C25B 9/75, C25B 9/77, C25B 11/03

(54) **ELECTROCHEMICAL ELECTRODE STRUCTURE, ELECTROCHEMICAL CELL, BIPOLAR ELECTRODE ASSEMBLY, ELECTROCHEMICAL CELL ARRANGEMENT, AND METHOD OF ATTACHING AN ELECTRODE ELEMENT TO A SUPPORTIVE ELEMENT OF AN ELECTROCHEMICAL ELECTRODE STRUCTURE FOR AN ELECTROCHEMICAL CELL**

(71) Applicant: thyssenkrupp nucera AG & Co. KGaA, 44141 Dortmund (DE)
(72) Inventor: Hamada, Tsuyoshi, Okayama, 706-0134 (JP); Iguchi, Yukinori, Okayama, 706-0134 (JP); Tanaka, Masato, Okayama, 706-0134 (JP); Kawanishi, Koji, Okayama, 706-0134 (JP)
(74) Representative: Meissner Bolte Partnerschaft mbB

(57) **Abstract**

The present invention relates to an electrochemical electrode structure comprising at least one electrode element and a supportive element. Each electrode element is a two-dimensionally extended electrically conductive element with an open structure and has a first edge portion. The supportive element has a resilient region extending areally in a plane of the main extension of the resilient region. The resilient region is adapted to push the at least one electrode member away from the supportive element in a direction at least substantially perpendicular to the plane of the main extension of the resilient region. The supportive element has a first tongue region arranged at an edge of the supportive element. The first edge portion of the at least one electrode element is bent around the first tongue region of the supportive element thereby attaching the at least one electrode element to the supportive element. Moreover, the invention relates to an electrochemical cell and to a bipolar electrode assembly each comprising such an electrode element, to an electrochemical cell arrangement with a plurality of such bipolar electrode assemblies, as well as to a method of attaching an electrode element to a supportive element of such an electrochemical electrode structure.

## Description

### Technical Field

The invention belongs to the field of electrochemical cells, in particular of so called "zero-gap electrolyzers". The invention relates to an electrochemical electrode structure comprising at least one electrode element and a supportive element, each electrode element being a two-dimensionally extended electrically conductive element with an open structure and having a first edge portion, the supportive element having a resilient region extending areally in a plane of the main extension of the resilient region, the resilient region being adapted to push the at least one electrode member away from the supportive element in a direction at least substantially perpendicular to the plane of the main extension of the resilient region. Moreover, the invention relates to an electrochemical cell comprising a first electrode, a second electrode and a separator, with the separator being a two-dimensionally extended partially permeable element arranged between the first electrode and the second electrode, the two-dimensionally extended partially permeable element having two surface sides, as well as to a bipolar electrode assembly comprising a first compartment, a second compartment, and a cell partition element with the cell partition element physically separating the first compartment from the second compartment and being arranged between the first compartment and the second compartment, and to an electrochemical cell arrangement containing a plurality of such bipolar electrode assemblies. The invention furthermore relates to a method of attaching an electrode element to a supportive element of an electrochemical electrode structure for an electrochemical cell.

### Background

In recent years, there has been a significant increase in interest in using hydrogen as a secondary energy carrier. Among other things, this increased interest is based on the advantages of hydrogen: hydrogen can be easily produced from water using renewable primary energy, hydrogen is a non-toxic material with a relatively high mass-related energy density, and the chemical energy stored in hydrogen can be easily converted back into electrical energy without releasing significant amounts of carbon dioxide or other greenhouse gases. In addition, hydrogen can also be used as an educt in various chemical processes. One important way of producing hydrogen is by electrolysis of water, a process in which hydrogen is generated in the cathode compartment of the electrolytic cell from alkaline aqueous solution, from acidic aqueous solution, or from neutral aqueous solution. The cathode compartment and the anode compartment are typically separated from each other by a separator such as a membrane or diaphragm. In many applications, alkaline water electrolysis in particular has proved to be a most promising process.

In the past, the efficiency of devices for alkaline water electrolysis was limited as such devices could only be operated at relatively low current densities, since a significant voltage drop occurs across the electrolyte solution due to high internal Ohmic resistance. Therefore, "zero-gap" design electrolytic cells were established in order to minimize the voltage drop across the electrolyte solution, thus allowing higher current densities to be achieved. In the zero-gap design, electrodes having an open structure (such as perforated or porous electrodes) are employed as anodes and cathodes that are brought in direct contact with the surfaces of the membrane with almost no spacing in order to reduce the width of the interelectrode gap and, thus, the voltage drop between both electrodes.

As a result of a direct contact between the outer edges of the mostly metallic electrodes and the upper surface of the membrane, mechanical damage to the thin membrane often occurs. Among others, such damage may result from chafing when the electrode with its open structure being in close contact with the membrane is moved on a microscopic level during flow of the electrolyte solution and evolution of gaseous products. In order to avoid such chafing, the electrode with the open structure is firmly attached to a rigid backing structure such as a current collector or a cell partition wall. In this regard, it is suggested in EP1845173A2 to secure an electrode over its area by using several coupling members that are attached to electrode coupling portions while the electrode coupling portions are connected to a plate spring retainer member which is joined to the electrode chamber partition. Such coupling members have a pin-like design piercing the electrode and extending into coupling holes of the electrode coupling portions therein retaining the electrode with its widened heads. By such design, the electrode is concavely deformed at the fixing points so that in those spots, local deviations from the zero-gap geometries occur. Moreover, since the widened heads covers the electrode area in those spots, the flow of electrolyte solution through the open structure of the electrode may be affected. Both aspects could result in a negative effect on the overall efficiency of the electrolytic cell.

In order to overcome such deficiencies, EP3819401A1 discloses attaching the electrode to the surface of the current collector (connected to the cell partition wall) by clamping the electrode by using a separate element such as an electrode fixing member or a gasket. Unfortunately, fixing the electrode by separate elements is undesired, as it requires additional steps when assembling or mounting the respective electrodes. Moreover, depending on the design and location of such additional elements, fixing the electrode by separate elements could potentially result in a reduced cell efficiency and stability.

Therefore, it is a task of the present invention to eliminate the above disadvantages and to provide an electrochemical electrode structure for a zero-gap electrolytic cell in which the electrode elements are directly attached to a supportive element while allowing for the highest possible yield. Another task is to provide an electrolysis cell comprising the same, a bipolar electrode assembly comprising such electrochemical electrode structure and an electrolysis cell arrangement with a plurality of such bipolar electrode assemblies, as well as a method of attaching an electrode element to a supportive element of an electrochemical electrode structure for an electrochemical cell.

### Summary

According to an aspect of the present invention, an electrochemical electrode structure is provided. The electrochemical electrode structure comprises at least one electrode element and a supportive element, each electrode element being a two-dimensionally extended electrically conductive element with an open structure and having a first edge portion, the supportive element having a resilient region extending areally in a plane of the main extension of the resilient region, the resilient region being adapted to push the at least one electrode member away from the supportive element in a direction at least substantially perpendicular to the plane of the main extension of the resilient region. The supportive element has a first tongue region arranged at an edge of the supportive element wherein the first edge portion of the at least one electrode element is bent around the first tongue region of the supportive element thereby attaching the at least one electrode element to the supportive element. According to the invented electrochemical electrode structure, no additional element is necessary to attach the electrode element to the supportive element, in contrast to the prior art designs suggested in EP1845173A2 or EP3819401A1. Therefore, the aforementioned drawbacks in these prior art designs may be solved. More specifically, no local deviations from the zero-gap geometries occur. These aspects could result in a positive effect on the overall efficiency of the electrochemical cell.

The electrode element can be more stably and firmly retained in the supportive element, if each electrode element has a second edge portion with the first edge portion and the second edge portion being arranged on opposing edges of the electrode element, and the supportive element has a second tongue region arranged at an edge of the supportive element opposite to the edge of the first tongue region. The second edge portion of the at least one electrode element is bent around the second tongue region of the supportive element thereby fixing the at least one electrode element to the supportive element.

In an exemplary supportive element, at least one tongue region may project beyond the respective edge with respect to the plane of the main extension of the resilient region. The at least one tongue region projecting beyond the edge may be formed within the plane of the main extension of the resilient region of the supportive element. Alternatively, the at least one tongue region projecting beyond the edge may be an outwardly slanted element projecting beyond the plane of the main extension of the resilient region of the supportive element.

The electrode element can be more stably and firmly retained in the supportive element, if each edge portion of the at least one electrode element bent around the respective tongue region of the supportive element has a width in a range from 3 mm to 40 mm.

In an exemplary supportive element, the resilient region of the supportive element may comprise a plate spring arrangement, in particular a plate spring arrangement comprising parallel rows of interdigitating spring strips that project alternating crosswise from the plane of the main extension of the resilient region. Other elastic elements, such as coil springs, are also applicable.

In a preferred example, at least one electrode element is a grid element or an expanded mesh element. Gases generated on the side of the electrode element facing the separator may be removed through the openings in the grid element or expanded mesh element to the rear side of the electrode element.

Damages to the separator may be prevented, if at the edge where the supportive element has the tongue region, the at least one electrode element has an inclined rim in which a strip portion of the electrode is inclined bent away.

In one example, the electrochemical electrode structure may comprise a plurality of electrode elements as segments. The electrode elements from the plurality of electrode elements may be arranged with the edges of adjacent electrode elements overlapping with each other or with the edges of adjacent electrode elements being joined edge-to-edge.

According to another aspect of the invention, an electrochemical cell is provided. The electrochemical cell comprises a first electrode element, a second electrode element and a separator, wherein the separator is a two-dimensionally extended partially permeable element arranged between the first electrode element and the second electrode element, the two-dimensionally extended partially permeable element having two surface sides. Either the first electrode element or the second electrode element or both the first and second electrode elements, are of an electrochemical electrode structures according to any of above aspects. Each electrode element is arranged next to one of the two surface sides of the separator.

The electrochemical cell may comprise a first compartment and a second compartment, wherein the first compartment accommodates the first electrode element, the second compartment accommodates the second electrode element, the separator separates the first compartment and the second compartment being arranged there between, and the separator has a first surface side and a second surface side wherein the first surface side contacts the first compartment and the second surface side contacts the second compartment for electrochemically interconnecting the first compartment and the second compartment.

According to yet another aspect of the invention, a bipolar electrode assembly is provided. The bipolar electrode assembly comprises a first compartment, a second compartment, and a cell partition element with the cell partition element physically separating the first compartment from the second compartment and being arranged between the first compartment and the second compartment, wherein at least one of the first compartment and the second compartment comprises an electrochemical electrode structure according to any of the above aspects.

According to yet another aspect of the invention, an electrochemical cell arrangement is provided. The electrochemical cell arrangement comprises a plurality of bipolar electrode assemblies each being a bipolar electrode assembly according to the above aspect, and a plurality of separators wherein the plurality of bipolar electrode assemblies and the plurality of separators are alternatingly stacked such that the first electrode element of a bipolar electrode assembly is electrochemically connected to the second electrode element of an adjacent bipolar electrode assembly with the separator being interposed therebetween, in particular with an ion-exchange membrane or porous diaphragm being interposed therebetween.

According to yet another aspect of the invention, a method of attaching an electrode element to a supportive element of an electrochemical electrode structure for an electrochemical cell, in particular of an electrochemical electrode structure according to any of the above aspects, is provided. The method comprises the steps of providing an electrode element being a two-dimensionally extended electrically conductive element with an open structure and having a first edge portion, providing a supportive element having a resilient region extending areally in a plane of the main extension of the resilient region and a first tongue region arranged at an edge of the supportive element, arranging the electrode element onto the resilient region of the supportive element so that the first edge portion of the electrode element extends at least in part beyond the first tongue region of the supportive element, bending the first edge portion of the at least one electrode element around the first tongue region of the supportive element thereby attaching the at least one electrode element to the supportive element in a wrap joint.

### Brief Description of the Drawings

FIG. 1 shows a schematic diagram of an electrochemical cell arrangement with a plurality of bipolar electrode assemblies according to the present invention;
FIG. 2 shows a schematic diagram of an electrochemical cell according to the present invention;
FIG. 3 shows the view A-A in FIG. 2;
FIG. 4 shows the section B-B in FIG. 3;
FIG. 5 shows another example of the section B-B in FIG. 3;
FIG 6 shows a perspective view of an exemplary supportive element in the electrochemical cell;
FIG. 7 shows a perspective view of another exemplary supportive element in the electrochemical cell;
FIG. 8 shows a perspective view of another exemplary supportive element in the electrochemical cell;
FIG. 9 shows a perspective view of yet another exemplary supportive element in the electrochemical cell;
FIG. 10 illustrates attachment of the electrode element to the supportive element of FIG. 6;
FIG. 11 shows the view C-C in FIG. 10;
FIG. 12 shows the section D-D in FIG. 10; and
FIG. 13 shows another section, similar to the view C-C, of another exemplary supportive element with two tongue regions at the upper and lower edges thereof.

### Detailed Description

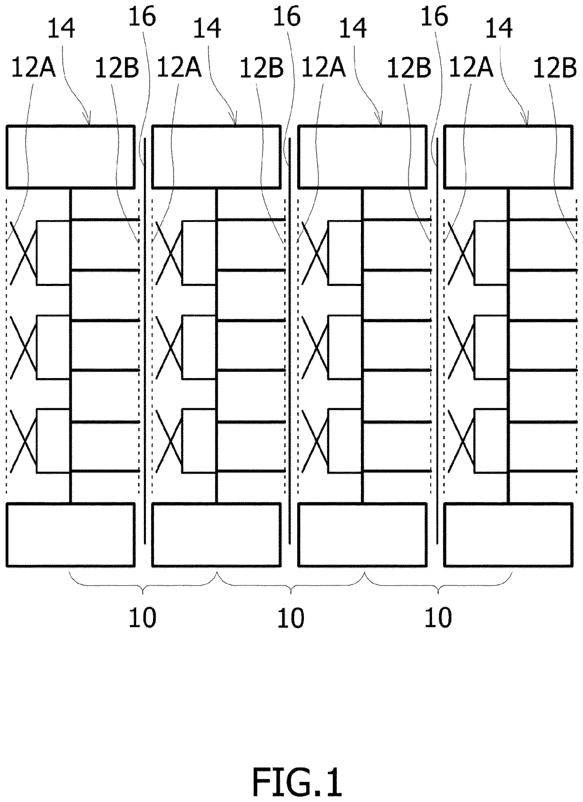

One exemplary electrolyzer to which the invention may be applied is a bipolar electrolyzer, such as ion-exchange membrane process electrolyzer, in which a plurality of bipolar electrode assemblies are arranged in series, with an ion exchange membrane or porous diaphragm as a separator being interposed between the adjacent bipolar electrode assemblies (FIG. 1). The filter press technology may be utilized to join the adjacent bipolar electrode assemblies so that there is substantially no gap between electrode elements on both sides of the separator. However, the electrolyzer may be a monopolar electrolyzer in which each cell unit has either a cathode or anode electrode element (not shown).

The electrochemical cell of the invention may be used for Chlor-Alkali electrolysis. In another example, the electrochemical cell of the invention may be used for alkaline water electrolysis (AWE). More generally, the electrochemical cell of the invention may be applicable to any electrolysis process using a first electrode element, a second electrode element, and a separator interposed between the first and second electrode elements.

As described herein, an electrochemical electrode structure may be defined as comprising at least one electrode element and a supportive element, the at least one electrode element being a two-dimensionally extended electrically conductive element with an open structure and having a first edge portion. The "open structure" means a structure having one or more openings penetrating from one side to the other side of the electrode element. The first edge portion may be the upper edge portion or lower edge portion of the electrode element. Alternatively, the first edge portion may be one of the lateral edge portions.

In addition, an electrochemical cell may be defined as comprising a first electrode element, a second electrode element and a separator, with the separator being a two-dimensionally extended partially permeable element arranged between the first electrode element and the second electrode element, the two-dimensionally extended partially permeable element having two surface sides.

Referring now to FIG. 1 in light of the above definitions, one electrochemical cell 10 may thus comprise a first electrode element 12A (e.g., cathode) of a bipolar electrode assembly 14, a second electrode element 12B (e.g., anode) of another bipolar electrode assembly 14 which is adjacent to said bipolar electrode assembly 14, and a separator 16 interposed between these electrode elements 12A, 12B. In other words, one electrochemical cell 10 may be configured by the two adjacent bipolar electrode assemblies 14, 14. As will be noted, therefore, the electrochemical cell and the bipolar electrode assembly are not always synonymous in this specification.

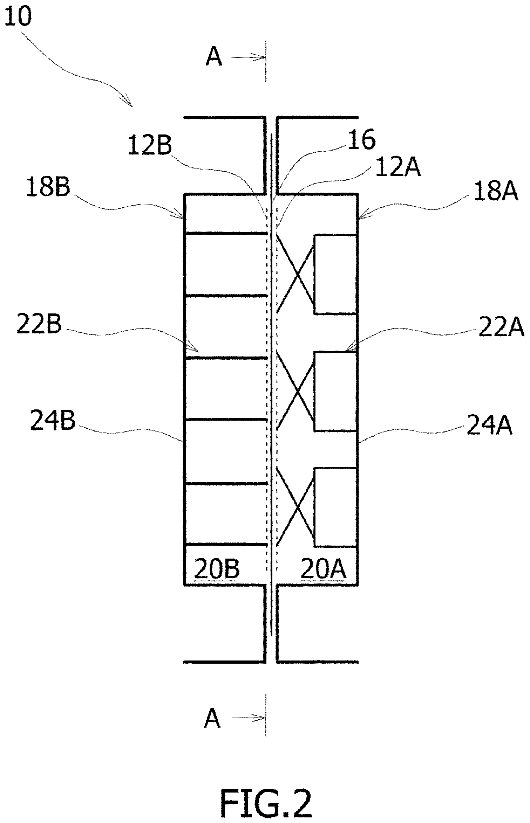

As shown in FIG. 2, the electrochemical cell 10 may comprise a first casing 18A which defines a first compartment 20A therein, a second casing 18B which defining a second compartment 20B therein, current collectors 22A, 22B, the first electrode element 12A, the second electrode element 12B, and the separator 16. The current collectors 22A, 22B may also be referred as part of electrode structures. The first and second casing 18A, 18B may include a rear wall or cell partition element 24A, 24B. The cell partition elements 24A, 24B face the separator 16 over the first and second compartments 20A, 20B, and define these compartments 20A, 20B together with the separator 16.

The separator 16 has a first surface side and a second surface side, wherein the first surface side contacts the first compartment 20A and the second surface side contacts the second compartment 20B for electrochemically interconnecting the first compartment 20A and the second compartment 20B. The separator 16 may be ion-exchange membrane. Alternatively, the separator 16 may be porous diaphragm, particularly an ion-permeable diaphragm. Ion-permeable diaphragms do not allow gases generated by the electrochemical reaction to permeate, but have ion-exchange function. The separator 16 may be a polymeric porous membrane, inorganic porous membrane, woven or non-woven fabrics, or the like.

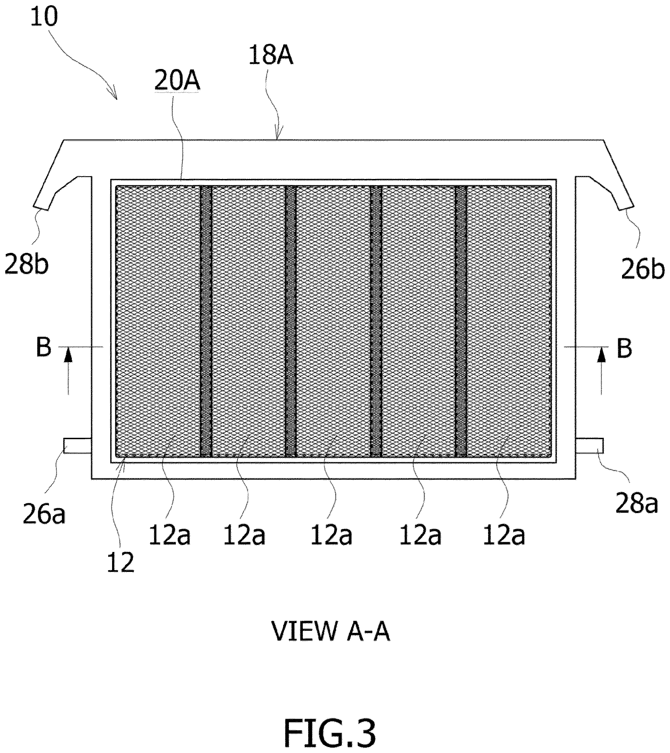

Referring to FIG. 3, the view A-A in FIG. 2 can be seen. Each electrochemical cell 10 may be connected to supply headers as well as to discharge headers. Preferably, for each compartment 20A, 20B within the electrochemical cell 10, the liquid to be electrochemical-processed is supplied from the bottom part of the cell 10 and discharged from the upper part of the cell 10. For example, in FIG. 3, the liquid for the first compartment 20A may be supplied from a bottom inlet 26a on the left side and discharged from an upper outlet 26b at the diagonal position with respect to the bottom inlet 26a. Likewise, the liquid for the second compartment 20B may be supplied from a bottom inlet 28a on the right side and discharged from an upper outlet 28b at the diagonal position with respect to the bottom inlet 28a.

In FIG. 3, the first electrode element 12A may extend over substantially the entire area of the first compartment 20A, with a small space being left around the first electrode element 12A with respect to the first casing 18A. Likewise, although not shown in FIG. 3, the second electrode element 12B may extend over substantially the entire area of the second compartment 20B, with a small space being left around the second electrode element 12B with respect to the second casing 18B. In order to increase the surface area used for electrochemical reaction and to efficiently remove the gases generated from the surfaces of the electrode elements 12 during the electrochemical reaction, the electrode element 12 may include one or more openings (open structure). In particular, the electrode element 12 may be perforated or porous electrodes. Such an open structure is advantageous in the zero-gap electrochemical cell, because gases generated on the side of the electrode element 12 facing the separator 16 may be removed through the openings toward the other side of the electrode element 12. Examples of such an electrode element 12 includes woven mesh, weave mesh, perforated metal, grid element, expanded metal, metal foam, or the like. More preferably, the electrode element is made of grid element or expanded metal. The expanded mesh may have a thickness of 0.5 mm or less. The expanded mesh may have a width of 0.1 m to 1.5 m. The electrode element 12 may also have a catalyst layer with high reaction activity on the surface of its base material. The material of the base material is not restricted, but may be steel, stainless steel, nickel or nickel-based alloys. One exemplary electrode element has a width of 0.1 m to 1.5 m. In one exemplary electrode element, the effective area of the electrode element is 1.0 m in width x 0.5 m in height, or more.

The first electrode element 12A may comprise a plurality of electrode elements 12a as segments, as shown in FIG. 3. Likewise, the second electrode element 12B may also comprise a plurality of electrode elements as segments (not shown).

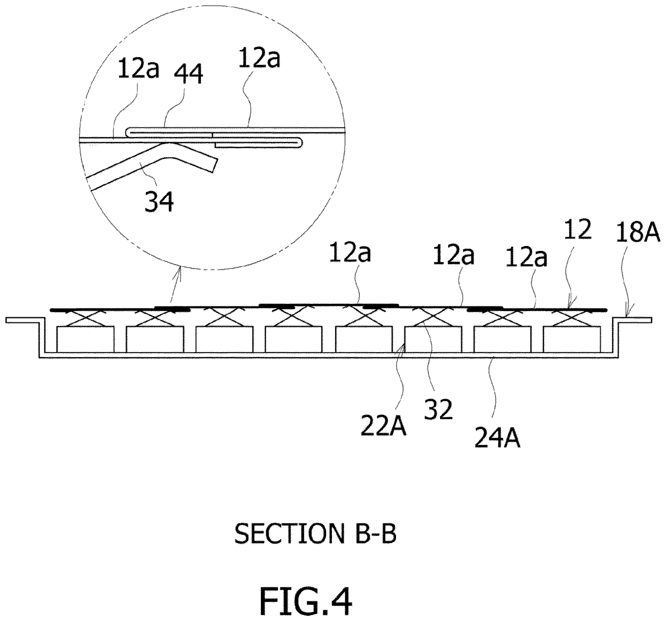

Referring to FIG. 4, the B-B section in FIG. 3 can be seen. When the electrode element 12 has the plurality of electrode elements 12a, these elements 12a may be arranged to partially overlap each other. Preferably, the width of the overlapping part is within a range of 1 % to 10 %, more preferably from 3 % to 8 %, of the width of the respective electrode element 12a.

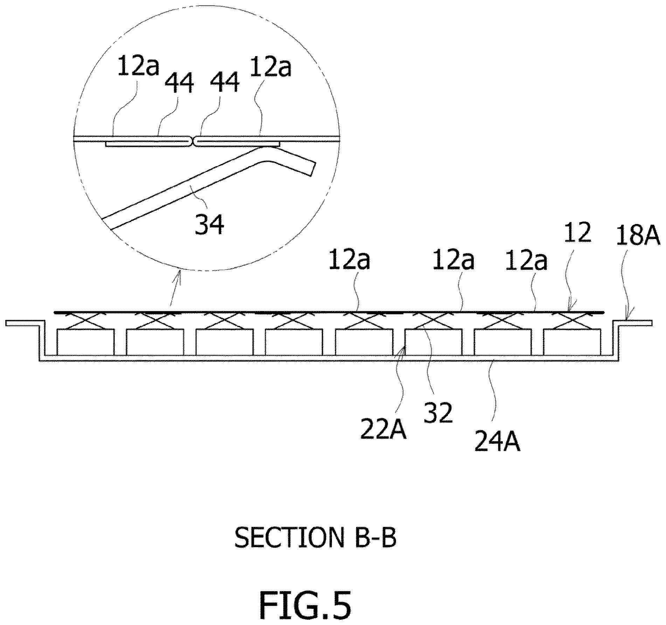

In a variant shown in FIG. 5, the electrode elements 12a may not overlap each other. The electrode elements 12a may be arranged with the edges of adjacent electrode elements 12a being joined edge-to-edge. In other words, the adjacent electrode elements 12a are so arranged as to be in contact or close to each other in the width direction of the electrochemical cell 10. This arrangement may be expected to have a flatter electrode surface.

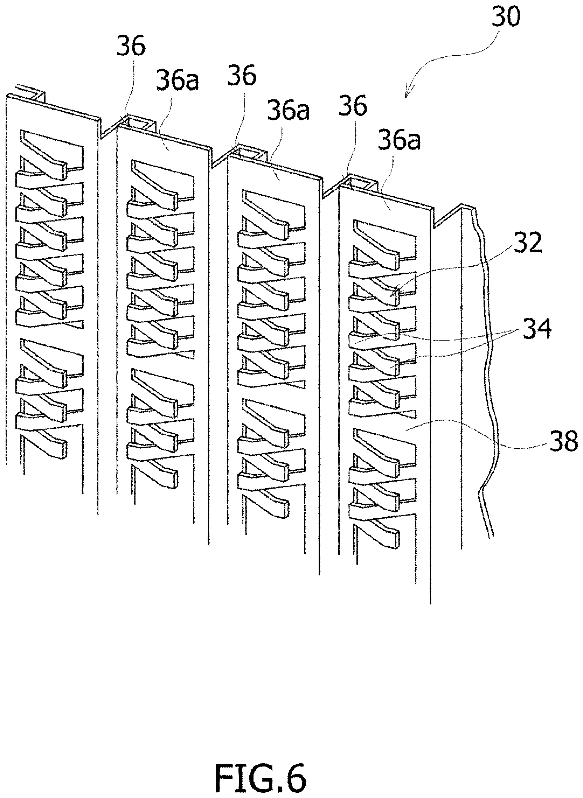

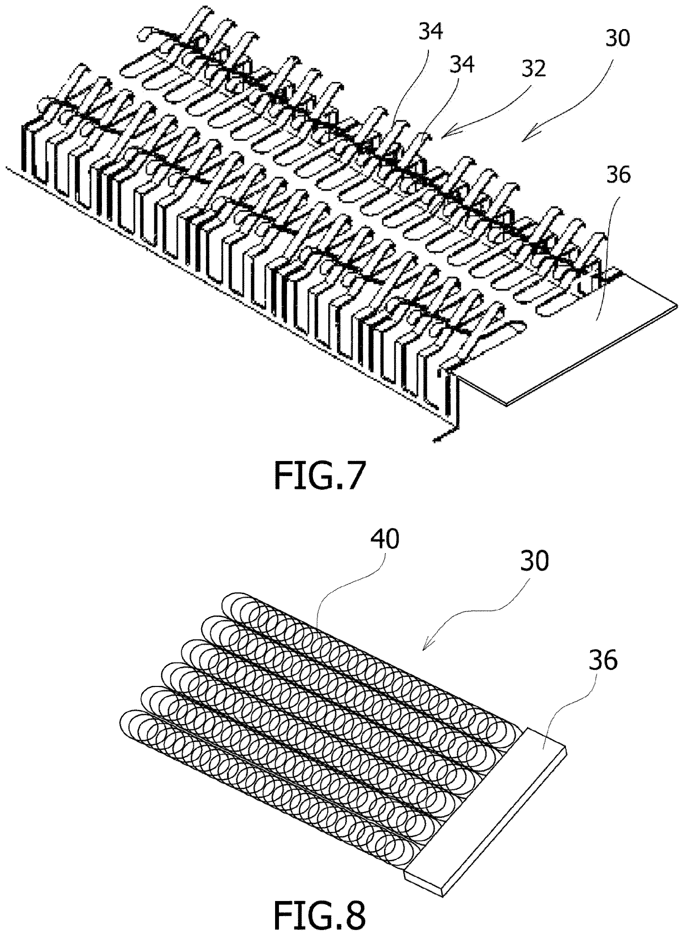

Referring now to FIG. 6, an exemplary supportive element suitable for direct attachment of the electrode element 12 is shown. The supportive element 30 includes a resilient region 32 extending areally in a plane of the main extension of the resilient region 32, the resilient region 32 being adapted to push the electrode member 12 away from the supportive element 30 in a direction at least substantially perpendicular to the plane of the main extension of the resilient region 32. In one example. the resilient region 32 of the supportive element 30 may include a plate spring arrangement, in particular a plate spring arrangement comprising parallel rows of interdigitating spring strips 34 that project alternating crosswise from the plane of the main extension of the resilient region 32. In other examples, the resilient region 32 of the supportive element 30 may include thinner and more numerous spring strips 34 as shown in FIG. 7, or one or more coil springs 40 as shown in FIG. 8.

The supportive element 30 further include a first tongue region 36 arranged at an edge of the supportive element wherein the corresponding edge portion of the electrode element 12 is bent around the first tongue region 36 of the supportive element 30 thereby attaching the electrode element 12 to the supportive element 30. No additional element is necessary to attach the electrode element 12 to the supportive element 30, in contrast to the prior art designs suggested in EP1845173A2 or EP3819401A1. Therefore, the aforementioned drawbacks in these prior art designs may be solved. More specifically, no local deviations from the zero-gap geometries occur. Moreover, since the attached electrode element 12 remains substantially flat, the flow of electrolyte solution through the open structure of the electrode element may not be affected. These aspects could result in a positive effect on the overall efficiency of the electrochemical cell 10.

In the example of FIG. 6, the first tongue region 36 is arranged at an upper edge of the supportive element 30. However, the first tongue region 36 may be arranged at a lower edge of the supportive element 30, or both the upper and lower edges of the supportive element 30 as described later. Alternatively, although not shown, the first tongue region 36 may be arranged at a lateral edge of the supportive element 30.

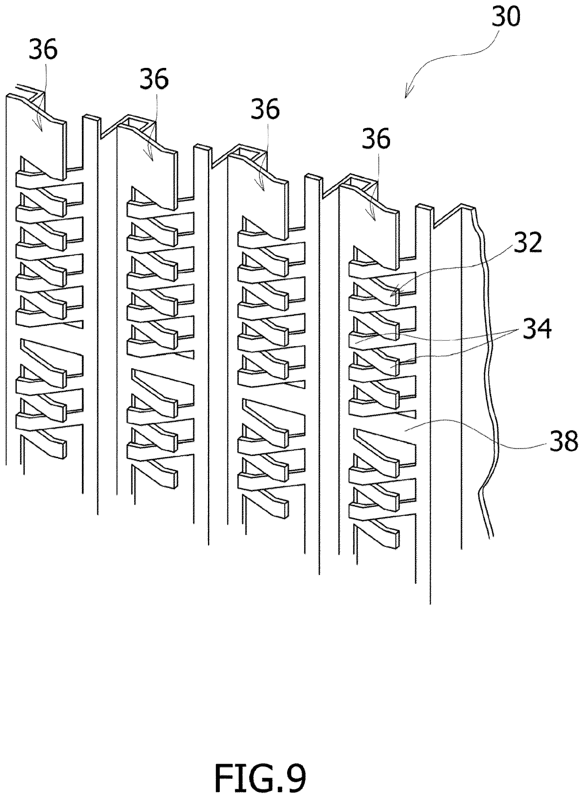

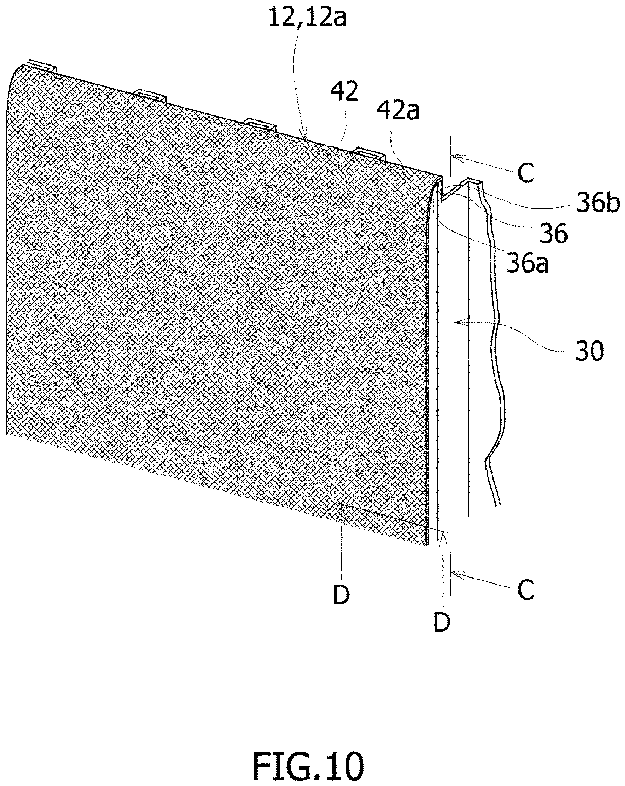

The first tongue region 36 may have a size and shape on which the corresponding edge of the electrode element 12 can be hooked and fixed. The first tongue region 36 may have a front side 36a facing the electrode element 12 and a rear side 36b (FIG. 10) facing away from the electrode element 12. The first tongue region 36 may project beyond the respective edge with respect to the plane of the main extension of the resilient region 32. The first tongue region 36 may be an outwardly slanted element projecting beyond the plane of the main extension of the resilient region 32 of the supportive element 30. Alternatively, as shown in FIG. 9, the first tongue region 36 is formed within the plane of the main extension of the resilient region 32 of the supportive element 30.

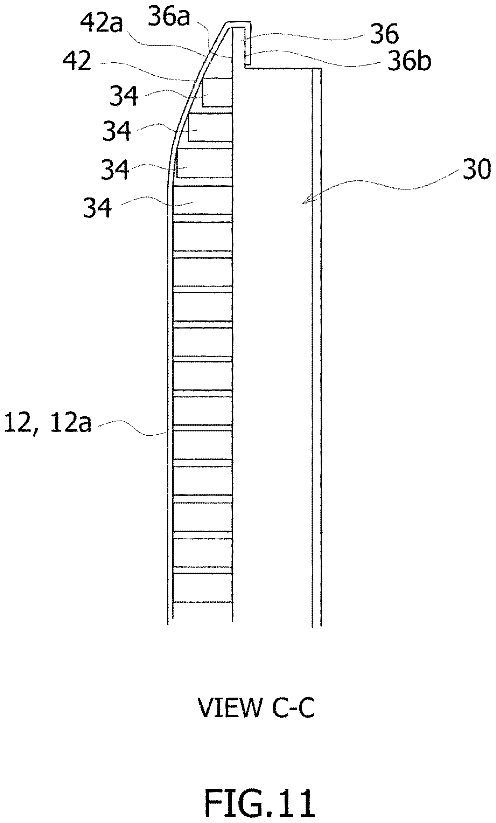

Referring to FIGS. 10 and 11, the electrode element 12 is attached to the supportive element 30 by means of the first tongue region 36. The corresponding edge portion (in this example, the upper edge portion) of the electrode element 12 is bent around the first tongue region 36 and engaged to the rear side 36b of the first tongue region 36. The edge portion of the electrode element 12 bent around the respective tongue region 36 of the supportive element 30 may have a width in a range from 3 mm to 40 mm. The electrode element 12 may be formed with a bent at the corresponding edge portion before the attachment to the supportive element 30. The electrode element 12 may be attached to the supportive element 30 by engaging the bent to the tongue edge 36. The bend may be a L-shaped bent.

At the edge where the supportive element 30 has the tongue region 36, the electrode element 12 may have an inclined rim 42 in which a strip portion 42a of the electrode element 12 is inclined bent away from the separator 16, i.e., toward the first tongue region 36. This could avoid damages to the separator 16. Preferably, the inclined rim 42 curves in a convex shape towards the separator 16. For this purpose, the height of the resilient region 32 from the base surface 38 of the supportive element 30 may be adjusted. Specifically, in the periphery of the supportive element 30 near the first tongue region 36, the heights of the spring strips 34 from the base surface 38 may gradually be decreased towards the first tongue region 36.

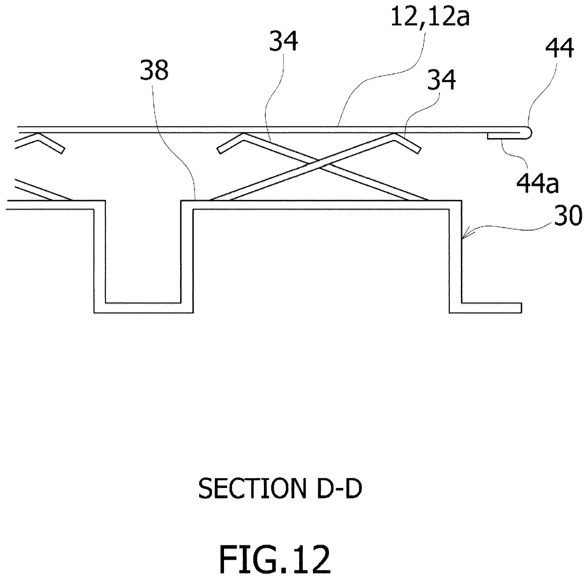

Referring to FIG. 12, the section D-D in FIG. 11 is shown. A hemming rim 44 is formed on the lateral edges of the electrode element 12 or 12a can be seen. The electrode element 12 no longer possesses the sharp edges. As such, the damage of the separator 16 due to the sharp edge of the electrode element can be prevented.

For more reliable damage prevention, the hemming rim 44 may have a bending angle between 170 ° and 180 °, in particular between 175 ° and 180 °, more particularly between 177 ° and 180 °. In an example shown in FIG. 12, the bending angle of the hemming rim is 180 °. It is preferable that of the strip portion 44a of the electrode element 12 in the hemming rim 44 is in a range from 3 mm to 50 mm.

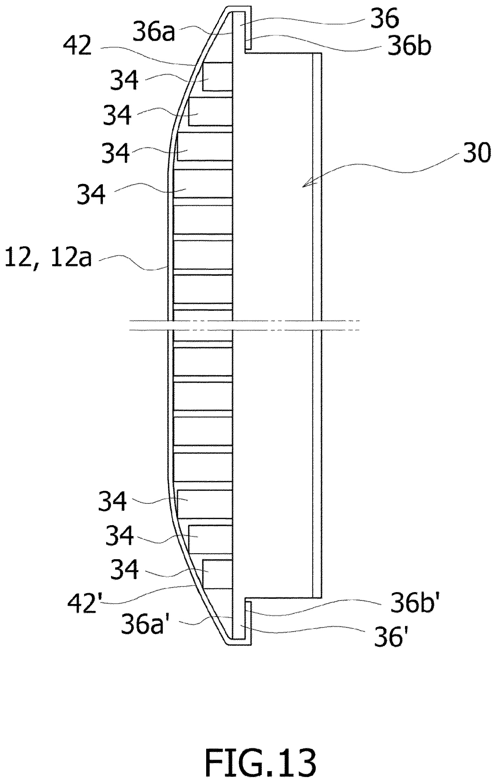

Referring to FIG. 13, anther exemplary electrochemical electrode structure according to the invention is shown. In this example, the electrode element 12 has a second edge portion (e.g., lower edge portion) with the first edge portion and the second edge portion being arranged on opposing edges of the electrode element 12. Further, the supportive element 30 in this example has a second tongue region 36' arranged at an edge (e.g., lower edge) of the supportive element 30 opposite to the edge of the first tongue region 36, wherein the second edge portion of the electrode element 12 is bent around the second tongue region 36' of the supportive element 30 thereby fixing the electrode element 12 to the supportive element 30. The electrode element 12 may also have a second inclined rim 42' at the edge corresponding to the second tongue region 36'. The above descriptions regarding the first tongue region 36 as well as the first inclined rim 42 hold true to the second tongue region 36' as well as the second inclined rim 42'.

According to an embodiment, an electrochemical cell arrangement comprising a plurality of bipolar electrode assemblies as discussed above is provide. The electrochemical cell arrangement 14 may include a plurality of separators 16 as discussed above. The plurality of bipolar electrode assemblies 14 and the plurality of separators 16 may be alternatingly stacked such that the first electrode element 12A of a bipolar electrode assembly 14 is electrochemically connected to the second electrode element 12B of an adjacent bipolar electrode assembly 14 with the separator 16 interposed therebetween, in particular with an ion-exchange membrane.

According to an embodiment of the present invention, a method of attaching an electrode element to the supportive element of the electrochemical electrode structure for the electrochemical cell is provided. The method includes: providing an electrode element 12 as discussed above; providing a supportive element 30 as discussed above and having the resilient region 32 and the first tongue region 36 arranged at an edge of the supportive element 30; arranging the electrode element 12 onto the resilient region 32 of the supportive element 30 so that the corresponding edge portion of the electrode element 12 extends at least in part beyond the first tongue region 36 of the supportive element 30; bending the corresponding edge portion of the electrode element 12 around the first tongue region 36 of the supportive element 30 thereby attaching the electrode element 12 to the supportive element 30 in a wrap joint. In a case where the electrode element 12 includes two or more electrode elements 12a as shown in FIG. 3, all the electrode elements 12a may be attached to the respective first tongue regions 36 of the supportive element 30 in the same manner, or only one or some electrode elements 12a may be attached to the respective first tongue regions 36 of the supportive element 30. Alternatively, all the electrode elements 12a may be attached to the first and second tongue regions 36, 36' of the supportive element 30 in the same manner, or only some electrode elements 12a may be attached to the first and second tongue regions 36, 36' of the supportive element 30.

### Reference sign list

- 10: electrochemical cell
- 12A (12): first electrode element
- 12B (12): second electrode element
- 12a: electrode element
- 14: bipolar electrode assembly
- 16: separator
- 18A: first casing
- 18B: second casing
- 20A: first compartment
- 20B: second compartment
- 22A, 22B: current collector
- 24A, 24B: cell partition element
- 30: supportive element
- 32: resilient region
- 34: spring strip
- 36: first tongue region
- 36': second tongue region
- 38: base surface
- 40: coil spring
- 42: inclined rim
- 42a: strip portion
- 44: hemming rim
- 44a: strip portion

## Claims

1. Electrochemical electrode structure comprising at least one electrode element (12) and a supportive element (30),
each electrode element (12) being a two-dimensionally extended electrically conductive element with an open structure and having a first edge portion,
the supportive element (30) having a resilient region (32) extending areally in a plane of the main extension of the resilient region (32), the resilient region (32) being adapted to push the at least one electrode element (12) away from the supportive element (30) in a direction at least substantially perpendicular to the plane of the main extension of the resilient region (32),
**characterized in that**
the supportive element (30) has a first tongue region (36) arranged at an edge of the supportive element (30) wherein the first edge portion of the at least one electrode element (12) is bent around the first tongue region (36) of the supportive element (30) thereby attaching the at least one electrode element (12) to the supportive element (30).

2. Electrochemical electrode structure according to claim 1, wherein
each electrode element (12) has a second edge portion with the first edge portion and the second edge portion being arranged on opposing edges of the electrode element, and
the supportive element (30) has a second tongue region (36') arranged at an edge of the supportive element (30) opposite to the edge of the first tongue region (36),
wherein the second edge portion of the at least one electrode element (12) is bent around the second tongue region (36') of the supportive element (30) thereby fixing the at least one electrode element (12) to the supportive element (30).

3. Electrochemical electrode structure according to claim 1 or 2, wherein at least one tongue region (36, 36') projects beyond the respective edge with respect to the plane of the main extension of the resilient region (32).

4. Electrochemical electrode structure according to claim 3, wherein the at least one tongue region (36, 36') projecting beyond the edge is formed within the plane of the main extension of the resilient region (32) of the supportive element (30).

5. Electrochemical electrode structure according to claim 3, wherein the at least one tongue region (36, 36') projecting beyond the edge is an outwardly slanted element projecting beyond the plane of the main extension of the resilient region (32) of the supportive element (30).

6. Electrochemical electrode structure according to any of claims 1 to 5,
wherein each edge portion of the at least one electrode element (12) bent around the respective tongue region (36, 36') of the supportive element (30) has a width in a range from 3 mm to 40 mm.

7. Electrochemical electrode structure according to any of claims 1 to 6,
wherein the resilient region (32) of the supportive element (30) comprises a plate spring arrangement, in particular a plate spring arrangement comprising parallel rows of interdigitating spring strips (34) that project alternating crosswise from the plane of the main extension of the resilient region (32).

8. Electrochemical electrode structure according to any of claims 1 to 7,
wherein the at least one electrode element (12) is a grid element or an expanded mesh element.

9. Electrochemical electrode structure according to any of claims 1 to 8, wherein at the edge where the supportive element (30) has the tongue region, the at least one electrode element (12) has an inclined rim (42) in which a strip portion (42a) of the electrode is inclined bent away.

10. Electrochemical electrode structure according to any of claims 1 to 9,
wherein the electrochemical electrode structure comprises a plurality of electrode elements (12a), in particular wherein the electrode elements (12a) from the plurality of electrode elements are arranged with the edges of adjacent electrode elements overlapping with each other or with the edges of adjacent electrode elements being joined edge-to-edge.

11. Electrochemical cell (10) comprising a first electrode element (12A), a second electrode element (12B) and a separator (16), with
- the separator (16) being a two-dimensionally extended partially permeable element arranged between the first electrode element (12A) and the second electrode element (12B), the two-dimensionally extended partially permeable element having two surface sides,
**characterized in that**
either the first electrode element (12A) or the second electrode element (12B) or both the first and second electrode elements (12A, 12B), are of an electrochemical electrode structure according to any of claims 1 to 10 wherein each electrode element (12A, 12B) is arranged next to one of the two surface sides of the separator (16).

12. Electrochemical cell (10) according to claim 11, wherein the electrochemical cell (10) comprises a first compartment and a second compartment, wherein
- the first compartment accommodates the first electrode element,
- the second compartment accommodates the second electrode element,
- the separator (16) separates the first compartment and the second compartment being arranged therebetween, and
- the separator (16) has a first surface side and a second surface side wherein the first surface side contacts the first compartment and the second surface side contacts the second compartment for electrochemically interconnecting the first compartment and the second compartment.

13. Bipolar electrode assembly (14) comprising a first compartment (20A), a second compartment (20B), and a cell partition element (24A, 24B) with the cell partition element (24A, 24B) physically separating the first compartment (20A) from the second compartment (20B) and being arranged between the first compartment (20A) and the second compartment (20B), wherein at least one of the first compartment (20A) and the second compartment (20B) comprises an electrochemical electrode structure according to any of claims 1 to 10.

14. Electrochemical cell arrangement comprising a plurality of bipolar electrode assemblies (14) each being a bipolar electrode assembly according to claim 13, and a plurality of separators (16) wherein the plurality of bipolar electrode assemblies (14) and the plurality of separators (16) are alternatingly stacked such that the first electrode element (12A) of a bipolar electrode assembly (14) is electrochemically connected to the second electrode element (12B) of an adjacent bipolar electrode assembly with the separator (16) being interposed therebetween, in particular with an ion-exchange membrane or porous diaphragm being interposed therebetween.

15. Method of attaching an electrode element (12) to a supportive element (30) of an electrochemical electrode structure for an electrochemical cell (10), in particular of an electrochemical electrode structure according to any of claims 1 to 10, the method comprising the steps of:
- providing an electrode element (12) being a two-dimensionally extended electrically conductive element with an open structure and having a first edge portion,
- providing a supportive element (30) having a resilient region (32) extending areally in a plane of the main extension of the resilient region (32) and a first tongue region (36) arranged at an edge of the supportive element (30),
- arranging the electrode element (12) onto the resilient region (32) of the supportive element (30) so that the first edge portion of the electrode element (12) extends at least in part beyond the first tongue region (36) of the supportive element (30),
- bending the first edge portion of the at least one electrode element (12) around the first tongue region (36) of the supportive element (30) thereby attaching the at least one electrode element (12) to the supportive element (30) in a wrap joint.
